(19) Europäisches Patentamt
European Patent Office
Office européen des brevets

(11) **EP 2 222 518 B1**

(12) **EUROPÄISCHE PATENTSCHRIFT**

(45) Veröffentlichungstag und Bekanntmachung des Hinweises auf die Patenterteilung:
**22.06.2011 Patentblatt 2011/25**

(21) Anmeldenummer: **08863546.1**

(22) Anmeldetag: **16.12.2008**

(51) Int Cl.:
***B60R 22/46*** (2006.01)

(86) Internationale Anmeldenummer:
**PCT/DE2008/002100**

(87) Internationale Veröffentlichungsnummer:
**WO 2009/079996 (02.07.2009 Gazette 2009/27)**

(54) **GURTAUFROLLER MIT STRAFFERANTRIEB**

BELT RETRACTOR HAVING TIGHTENING DRIVE

ENROULEUR DE CEINTURE AVEC ENTRAÎNEMENT DE RÉTRACTEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.12.2007 DE 102007063461**

(43) Veröffentlichungstag der Anmeldung:
**01.09.2010 Patentblatt 2010/35**

(73) Patentinhaber: **Takata-Petri AG**
**63743 Aschaffenburg (DE)**

(72) Erfinder: **PECHHOLD, Christoph**
**89155 Erbach (DE)**

(74) Vertreter: **Fischer, Uwe**
**Patentanwalt**
**Moritzstraße 22**
**13597 Berlin (DE)**

(56) Entgegenhaltungen:
EP-A- 1 199 230     EP-A- 1 283 137
DE-A1- 10 231 268   DE-A1- 19 602 549
US-B1- 6 363 722

**Beschreibung**

Die Erfindung bezieht sich auf einen Gurtaufroller für einen Sicherheitsgurt mit einer Gurtspule zum Auf- und Abwickeln des Sicherheitsgurts und mit einem Strafferantrieb gemäß dem Oberbegriff des Anspruchs 1.

Ein derartiger Gurtaufroller mit Strafferantrieb ist aus der europäischen Patentanmeldung EP 1 283 137 bekannt. Der Strafferantrieb umfasst einen Gasgenerator, eine mit der Gurtspule des Gurtaufrollers in Verbindung stehende Antriebsvorrichtung und eine Verbindungseinrichtung, die den Gasgenerator und die Antriebsvorrichtung verbindet. Die Verbindungseinrichtung weist ein Führungsrohr und eine Vielzahl von in dem Führungsrohr befindlichen Schubgliedern auf, die nach einem Auslösen des Gasgenerators beschleunigt werden und die Antriebsvorrichtung zum Aufwickeln des Sicherheitsgurtes antreiben.

Ausgehend von dem beschriebenen Stand der Technik liegt der Erfindung die Aufgabe zugrunde, einen Gurtaufroller zu schaffen, der eine gute Straffleistung bei möglichst geringem Platzbedarf aufweist.

Diese Aufgabe wird ausgehend von einem Gurtaufroller der eingangs beschriebenen Art erfindungsgemäß durch die kennzeichnenden Merkmale des Anspruchs 1 gelöst. Vorteilhafte Ausgestaltungen des erfindungsgemäßen Gurtaufrollers sind in Unteransprüchen angegeben.

Danach ist erfindungsgemäß vorgesehen, dass in dem Führungsrohr zwischen dem Gasgenerator und der dem Gasgenerator zugewandten Seite zumindest eines der Schubkörper zumindest ein Dichtelement angeordnet ist, das innen an dem Führungsrohr, vorzugsweise gasdicht, anliegt.

Ein wesentlicher Vorteil des erfindungsgemäßen Gurtaufrollers ist darin zu sehen, dass durch das erfindungsgemäß vorgesehene Dichtelement ein Gas- und damit Druckverlust durch den Spalt zwischen den Schubgliedern und dem Führungsrohr verhindert wird. Zwar ist der Außendurchmesser der Schubglieder bei den Gurtaufrollern gemäß dem Stand der Technik üblicherweise an den Innenrohrdurchmesser des Führungsrohrs angepasst, jedoch muss stets ein gewisser Restspalt in Kauf genommen werden, um die mechanischen Reibungsverluste der Schubglieder durch Reibung an der Rohrinnenwand des Führungsrohres nicht zu groß werden zu lassen. An dieser Stelle setzt die Erfindung an, indem vorgeschlagen wird, eine zusätzliche Abdichtung mit zumindest einem Dichtelement durchzuführen, wodurch Druckverlust vermieden, zumindest reduziert, und die Strafferleistung erhöht wird.

Vorzugsweise ist das Dichtelement schmaler als die Schubkörper. Unter dem Begriff "schmaler" ist dabei zu verstehen, dass die Längsausdehnung des Dichtelements längs der Längsrichtung des Führungsrohres kleiner ist als die Längsausdehnung der Schubkörper längs der Längsrichtung des Führungsrohres. Ein Vorteil dieser Ausgestaltung besteht darin, dass die Größe des Strafferantriebs durch einen oder mehrere Dichtelemente - in Längsrichtung des Führungsrohres gesehen - nur minimal bzw. unwesentlich vergrößert wird, im Unterschied beispielsweise zu anderen "dicken" Dichtelementen wie zum Beispiel Dichtkugeln oder dergleichen.

Besonders bevorzugt weist das Dichtelement einen radial äußeren Außenbereich und einen radial inneren Innenbereich auf, wobei der Innenbereich schmaler als der Außenbereich ist. Bei dieser Ausgestaltung wird durch den dicken Außenbereich eine gute Dichtwirkung erzielt, ohne dass die Größe des Strafferantriebs deshalb deutlich größer wird; denn der Abstand der Massekörper untereinander kann verhältnismäßig klein bleiben, weil die Massekörper an dem schmalen Innenbereich des Dichtelements anliegen können. Auch weisen innen schmale und außen dickere Dichtelemente weniger Masse auf als anders geformte Dichtelemente wie beispielsweise Dichtkugeln. Aufgrund ihrer geringeren Masse "verbrauchen" innen schmale und außen dickere Dichtelemente im Übrigen auch weniger Strafferleistung als andere Dichtelemente, wenn sie mit den Schubgliedern zusammen beschleunigt werden.

Mit Blick auf eine besonders gute Dichtwirkung wird es als vorteilhaft angesehen, wenn das Dichtelement in seinem radial äußeren Außenbereich eine Dichtlippe aufweist, die sich radial nach außen verjüngt. Besonders bevorzugt weist das Dichtelement in seinem radial äußeren Außenbereich mindestens zwei Dichtlippen auf, die voneinander durch eine Furche getrennt sind.

Gemäß einer besonders bevorzugten Ausgestaltung ist vorgesehen, dass das Dichtelement durch einen Dichtring gebildet ist, dessen Außenringseite innen an dem Führungsrohr anliegt. Ein Vorteil dieser Variante besteht in der guten Dichtwirkung bei minimaler zusätzlicher Masse, da der Innenbereich des Dichtelements frei bleibt.

Bei einer besonders bevorzugten Ausgestaltung des Gurtaufrollers ist vorgesehen, dass der Dichtring derart ausgeformt ist, dass zwei benachbarte und durch den Dichtring voneinander getrennte Schubglieder einander normalerweise nicht berühren, also weder vor einem Auslösen des Gasgenerators noch nach einem Auslösen des Gasgenerators während eines "störungsfreien Strafferbetriebs". Unter einem störungsfreien Strafferbetrieb ist dabei zu verstehen, dass die Schubglieder zum Straffen des Sicherheitsgurtes durch das aus dem Gasgenerator austretende Gas in Richtung Antriebsvorrichtung beschleunigt werden und dabei die Gurtspule antreiben. Allenfalls in dem Falle, dass es zu einer Blockade der Gurtspule und/oder der Antriebsvorrichtung kommt und die Schubglieder dadurch nicht durch das Führungsrohr hindurch bewegt werden können - wenn also der Straffvorgang "gestört" ist-, sollten die Dichtringe eine Berührung benachbarter Schubglieder erlauben.

Eine entsprechende Trennwirkung der Dichtringe wird beispielsweise erreicht, wenn das Verhältnis zwischen dem Außendurchmesser und dem Innendurchmesser der Dichtringe zwischen 1,5 und 3 liegt. Dieses Verhältnis erlaubt darüber hinaus eine sehr wirkungsvolle Beschleunigung der Schubglieder.

Im Hinblick auf eine gute Abdichtung des Führungsrohres wird es als vorteilhaft angesehen, wenn der Außendurchmesser des Dichtelements zwischen dem 1,02-fachen und dem 1,06-fachen des Innendurchmessers des Führungsrohrs liegt. Das Dichtelement muss in diesem Falle radial nach innen zusammengedrückt in das Führungsrohr eingeführt werden.

Das Dichtelement besteht vorzugsweise aus einem elastischen Material wie zum Beispiel einem Elastomer. Beispielsweise besteht das Dichtelement aus einem oder mehreren der folgenden Materialien, oder weist diese vorzugsweise zumindest auch auf: Ethylen-Propylen-Dien-Kautschuk, Ethylen-Propylen-Kautschuk, Nitrilkautschuk, hydrierten Nitrilkautschuk, Naturkautschuk.

Die Außenseite des Dichtelements ist beispielsweise beschichtet, vorzugsweise mit einer Beschichtung, die die Reibung an der Innenwand des Führungsrohres reduziert. Eine solche Beschichtung kann beispielsweise ein oder mehrere fluorierte Polymere wie zum Beispiel Polytetrafluorethylen (PTFE) enthalten.

Das Führungsrohr und die Dichtelemente/ Dichtringe können eine beliebige Innenkontur bzw. Außenkontur aufweisen, beispielsweise eine runde, ovale oder mehreckige, insbesondere eine rechteckige oder quadratische Kontur. Entsprechendes gilt für die Innenkontur der Ringöffnung der Dichtringe.

Im Übrigen wird es als vorteilhaft angesehen, wenn in dem Führungsrohr an der dem Gasgenerator zugewandten Seite des vom Gasgenerator aus gesehen ersten Schubkörpers ein Dichtelement angeordnet ist.

Auch kann beispielsweise in dem Führungsrohr - vom Gasgenerator aus gesehen - zwischen dem ersten und dem zweiten Schubkörper und/oder zwischen dem zweiten und dem dritten Schubkörper ein Dichtelement angeordnet sein.

Vorzugsweise sind in dem Führungsrohr zumindest zwei Dichtelemente vorhanden, nämlich beispielsweise zumindest ein Dichtelement zwischen dem vom Gasgenerator aus gesehen ersten und zweiten Schubkörper und zumindest ein Dichtelement zwischen dem vom Gasgenerator aus gesehen zweiten und dritten Schubkörper.

Auch können in dem Führungsrohr drei Dichtelemente vorhanden sein, nämlich beispielsweise zumindest ein Dichtelement zwischen dem vom Gasgenerator aus gesehen ersten und zweiten Schubkörper, zumindest ein Dichtelement zwischen dem vom Gasgenerator aus gesehen zweiten und dritten Schubkörper und zumindest ein Dichtelement an der dem Gasgenerator zugewandten Seite des vom Gasgenerator aus gesehen ersten Schubkörpers.

Zwischen dem Gasgenerator und dem vom Gasgenerator aus gesehen ersten Schubkörper kann beispielsweise ein Antriebskolben vorhanden sein, jedoch ist dies nicht zwingend erforderlich. Ist ein Antriebskolben vorhanden, so liegt vorzugsweise zumindest ein Dichtelement zwischen dem ersten Schubkörper und diesem Antriebskolben.

Vorzugsweise ist das Führungsrohr und/oder der Innenring im Querschnitt rund, oval oder mehreckig, insbesondere rechteckig oder quadratisch.

Die Erfindung wird nachfolgend anhand von Ausführungsbeispielen näher erläutert; dabei zeigen beispielhaft

Figur 1     ein erstes Ausführungsbeispiel für einen erfin- dungsgemäßen Gurtaufroller, bei dem drei Dicht- ringe in einem Führungsrohr des Gurtaufrollers vorhanden sind,

Figur 2     ein zweites Ausführungsbeispiel für einen erfin- dungsgemäßen Gurtaufroller, bei dem ein An- triebskolben zwischen Gasgenerator und Schub- gliedern fehlt,

Figur 3     ein drittes Ausführungsbeispiel für einen erfin- dungsgemäßen Gurtaufroller mit zwei Dichtringen und ohne Antriebskolben,

Figur 4     ein viertes Ausführungsbeispiel für einen erfin- dungsgemäßen Gurtaufroller, bei dem lediglich ein einziger Dichtring vorhanden ist,

Figur 5     ein fünftes Ausführungsbeispiel für einen erfin- dungsgemäßen Gurtaufroller, bei dem ebenfalls lediglich ein einziger Dichtring vorhanden ist,

Figur 6     ein sechstes Ausführungsbeispiel für einen er- findungsgemäßen Gurtaufroller mit zwei Dichtrin- gen und einem Antriebskolben,

Figur 7     ein Ausführungsbeispiel für einen Dichtring für die Gurtaufroller gemäß den Figuren 1 bis 6,

Fig. 8-10   ein siebentes Ausführungsbeispiel für einen er- findungsgemäßen Gurtaufroller mit zwei Dichtele- menten ohne Antriebskolben, und

Figur 11    verschiedene Ausführungsbeispiele für Dichtele- mente.

In den Figuren werden der Übersicht halber für identische oder vergleichbare Komponenten stets dieselben Bezugszeichen verwendet.

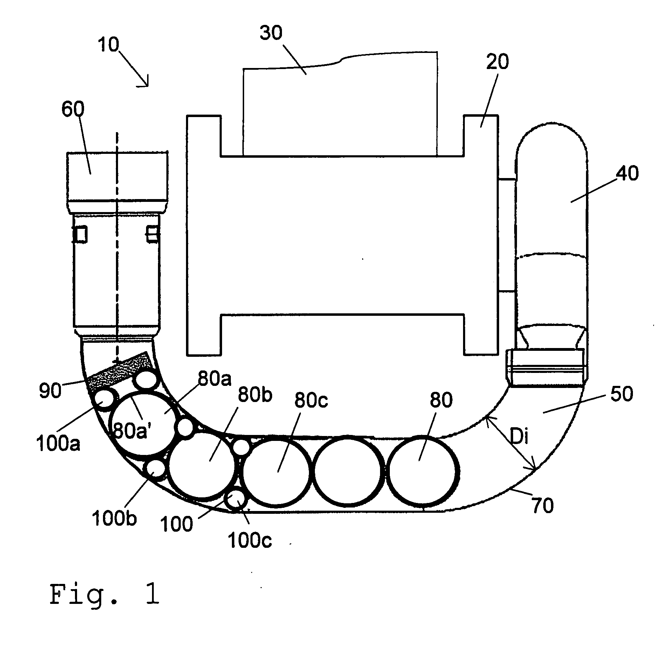

In der Figur 1 erkennt man - in einer vereinfachten schematischen Darstellung - Bestandteile eines mit einem Strafferantrieb ausgestatteten Gurtaufrollers 10, der eine Gurtspule 20 zum Auf- und Abwickeln eines Sicherheitsgurtes 30 umfasst. Außerdem weist der Gurtaufroller 10 eine Antriebsvorrichtung 40 auf, die mit der Gurtspule 20 sowie über eine Verbindungseinrichtung 50 mit einem Gasgenerator 60 verbunden ist.

In der Figur 1 lässt sich darüber hinaus erkennen, dass die Verbindungseinrichtung 50 ein Führungsrohr 70 mit Schubgliedern 80 in Form von Kugeln aufweist. Die vom Gasgenerator 60 aus gesehen erste Kugel ist mit dem Bezugszeichen 80a, die zweite Kugel mit dem Bezugszeichen 80b und die dritte Kugel mit dem Bezugszeichen 80c gekennzeichnet. Zwischen dem Gasgenerator 60 und der ersten Kugel 80a befindet sich ein Antriebskolben 90.

Zur Abdichtung des Führungsrohrs 70 sind darüber hinaus drei Dichtringe in Form von O-Ringen erkennbar. Einer dieser O-Ringe liegt zwischen dem Antriebskolben 90 und der ersten Kugel 80a, und zwar auf der dem Gasgenerator 60 zugewandten Seite 80a' der Kugel 80a.

Ein weiterer O-Ring 100b befindet sich zwischen der ersten Kugel 80a und der zweiten Kugel 80b, und ein dritter O-Ring 100c ist zwischen der zweiten Kugel 80b und der dritten Kugel 80c angeordnet.

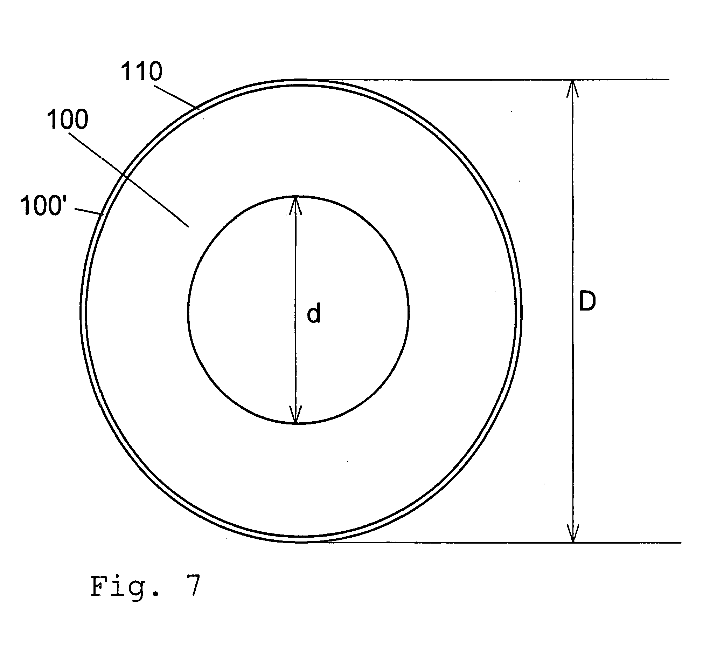

Die Funktion der O-Ringe 100 besteht darin, eine Gasabdichtung des Führungsrohres 70 zu erreichen. Aus diesem Grunde ist der Außendurchmesser D der O-Ringe 100 (vgl. Fig. 7) stets etwas größer als der Innendurchmesser Di des Führungsrohres 70. Vorzugsweise ist der Außendurchmesser D der O-Ringe 100 ca. 2 % bis 6 % größer als der Innendurchmesser Di des Führungsrohres 70. Es gilt dann also beispielsweise:

$$Di * 1,02 \leq D \leq Di * 1,06$$

Ein Querschnitt der O-Ringe 100 ist beispielhaft in der Figur 7 dargestellt. Die bereits erwähnte Dichtwirkung lässt sich bei den O-Ringen 100 beispielsweise erreichen, wenn diese aus einem oder mehreren der folgenden Materialien bestehen oder diese aufweisen: Ethylen-Propylen-Dien-Kautschuk, Ethylen-Propylen-Kautschuk, Nitrilkautschuk, hydrierten Nitrilkautschuk, Naturkautschuk.

Bezüglich des Innendurchmessers d der O-Ringe 100 sei erwähnt, dass dieser vorzugsweise derart gewählt wird, dass zwei benachbarte und durch einen O-Ring voneinander getrennte Kugeln einander normalerweise nicht berühren, also weder vor einem Auslösen des Gasgenerators 60 noch nach einem Auslösen des Gasgenerators 60 während eines "störungsfreien Strafferbetriebs". Unter einem störungsfreien Strafferbetrieb ist dabei zu verstehen, dass die Kugeln 80 zum Straffen des Sicherheitsgurtes durch das aus dem Gasgenerator 60 austretende Gas in Richtung Antriebsvorrichtung 40 beschleunigt werden und dabei die Gurtspule 20 antreiben. Lediglich in dem Falle, dass es zu einer Blockade der Gurtspule 20 und/oder der Antriebsvorrichtung 40 kommt und die Kugeln 80 somit trotz Auslösen des Gasgenerators 60 nicht durch das Führungsrohr 70 bestimmungsgemäß beschleunigt werden können - wenn also der Straffvorgang "gestört" ist-, sollten die O- bzw. Dichtringe 100 eine Berührung der benachbarten Antriebskugeln 80 erlauben. Eine entsprechende Trennwirkung der Dichtringe 100 wird beispielsweise erreicht, wenn das Verhältnis zwischen dem Außendurchmesser D und dem Innendurchmesser d der Dichtringe zwischen 1,5 und 3 liegt.

Besonders bevorzugt sind die O-Ringe 100 außenseitig beschichtet, um eine möglichst geringe Gleitreibung zwischen den O-Ringen 100 und dem Führungsrohr 70 zu erreichen. Eine solche Beschichtung ist in der Figur 7 beispielhaft gezeigt mit dem Bezugszeichen 110 gekennzeichnet. Die Beschichtung 110 kann beispielsweise aus Polytetrafluorethylen bestehen. Kommt es nun zu einem Fahrzeugunfall, einem kritischen Fahrmanöver oder einer Notbremssituation und damit einhergehend zu einem Auslösen des Gasgenerators 60, so wird durch das Gas des Gasgenerators 60 ein Überdruck erzeugt, durch den der Antriebskolben 90 in Richtung der Antriebsvorrichtung 40 beschleunigt wird. Durch diese Beschleunigung des Antriebskolbens 90 werden die Kugeln 80 ebenfalls in Richtung Antriebsvorrichtung 40 beschleunigt, so dass die Antriebsvorrichtung 40 angetrieben wird und ihrerseits die Gurtspule 20 zum Aufwickeln des Sicherheitsgurtes 30 antreiben kann. Ein Druckverlust dadurch, dass Gas ungewünscht zwischen den Kugeln 80 und dem Führungsrohr 70 hindurch zur Antriebsvorrichtung 40 gelangt, wird durch die O-Ringe 100 vermieden, da diese außenseitig eine Abdichtung bewirken. Die O-Ringe 100 werden im Übrigen gemeinsam mit den Kugeln 80 beschleunigt.

Bezüglich des Aufbaus des Gasgenerators 60, des Führungsrohres 70, der Antriebsvorrichtung 40 und der Gurtspule 20 sei beispielsweise auf die eingangs bereits erwähnte Druckschrift EP 1 283 137 A2 verwiesen, in der ein entsprechender Gurtaufroller beispielhaft gezeigt ist. Der Gurtaufroller 10 gemäß der Figur 1 kann in ähnlicher Form, selbstverständlich aber auch anders, aufgebaut sein.

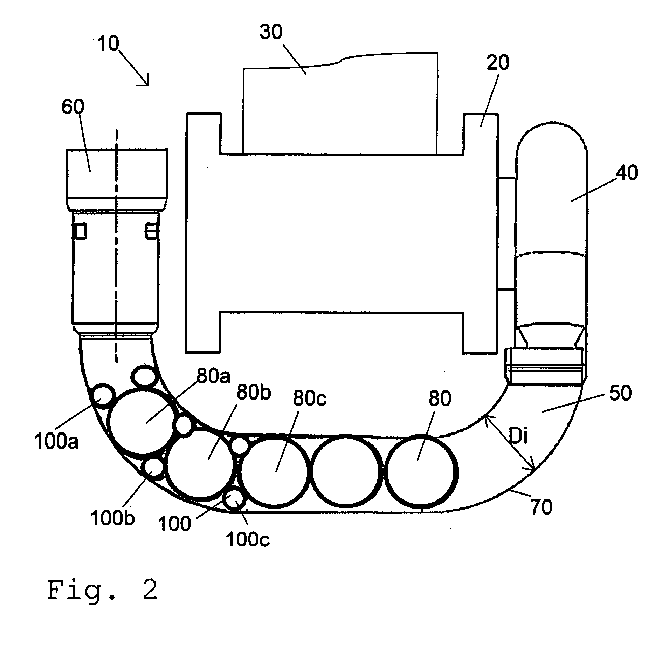

In der Figur 2 ist ein zweites Ausführungsbeispiel für einen Gurtaufroller 10 gezeigt. Im Unterschied zu dem ersten Ausführungsbeispiel gemäß der Figur 1 fehlt der Antriebskolben 90, so dass das Gas des Gasgenerators 60 unmittelbar auf den ersten O-Ring 100a und auf die erste Kugel 80a einwirken kann. Im Übrigen entspricht das zweite Ausführungsbeispiel dem ersten Ausführungsbeispiel gemäß Figur 1.

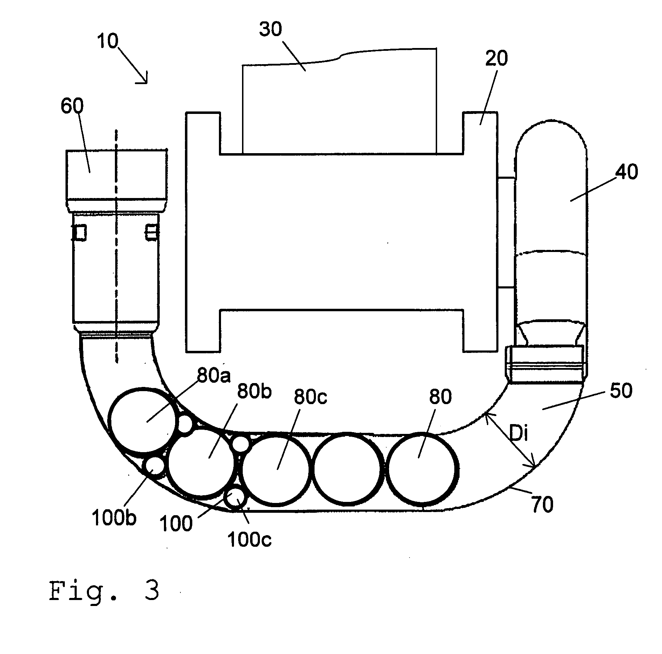

In der Figur 3 ist ein drittes Ausführungsbeispiel für einen Gurtaufroller 10 gezeigt. Bei diesem Gurtaufroller befinden sich zwei Dichtringe 100b und 100c in dem Führungsrohr 70. Eines der beiden O-Ringe 100b liegt dabei zwischen der ersten Kugel 80a und der zweiten Kugel 80b und der zweite O-Ring 100c zwischen der zweiten Kugel 80b und der dritten Kugel 80c. Ein Antriebskolben wie bei dem ersten Ausführungsbeispiel gemäß Figur 1 ist bei diesem dritten Ausführungsbeispiel ebenfalls nicht vorhanden.

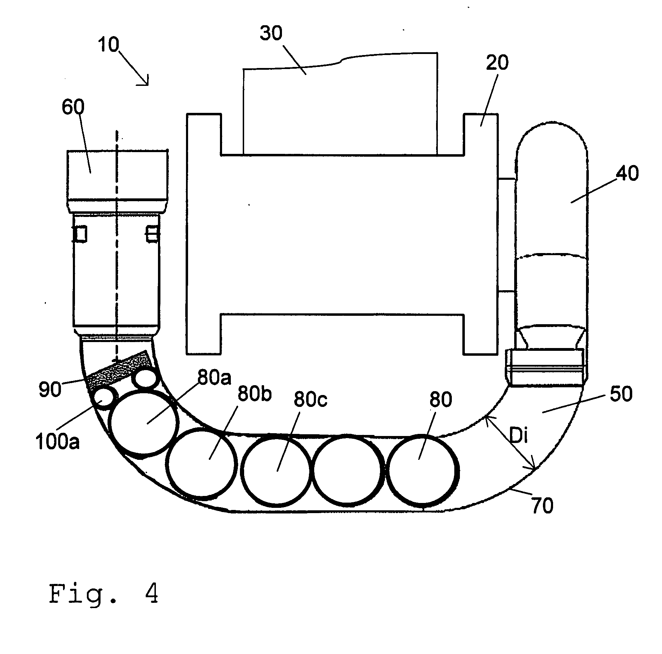

In der Figur 4 ist ein viertes Ausführungsbeispiel für einen Gurtaufroller 10 gezeigt. Bei diesem vierten Ausführungsbeispiel ist lediglich ein einziger O-Ring 100a vorhanden, der zwischen dem Antriebskolben 90 und der ersten Kugel 80a der Verbindungseinrichtung 50 liegt. Im Übrigen entspricht das vierte Ausführungsbeispiel dem ersten Ausführungsbeispiel gemäß Figur 1.

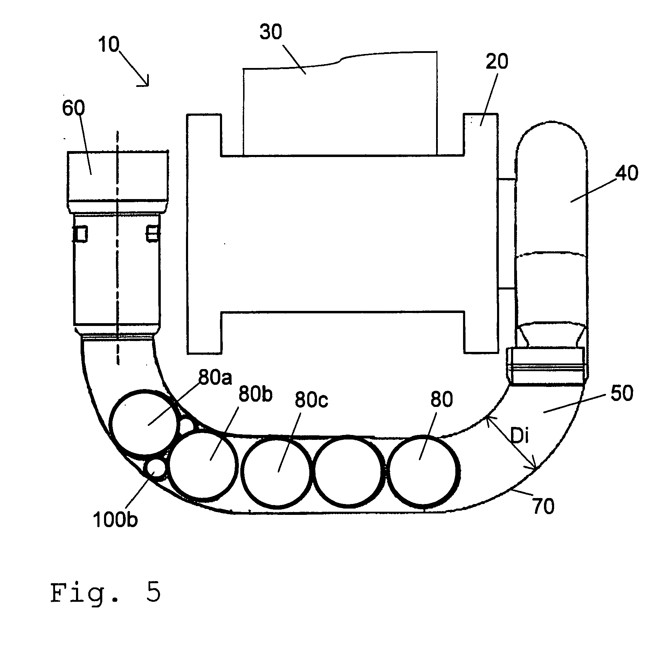

In der Figur 5 erkennt man ein fünftes Ausführungsbeispiel für einen Gurtaufroller. Bei diesem fünften Ausführungsbeispiel ist ebenfalls ein einziger Dichtring 100b vorhanden, wobei dieser einzige Dichtring 100b zwischen der ersten Kugel 80a und der zweiten Kugel 80b angeordnet ist. Ein Antriebskolben 90 fehlt. Im Übrigen entspricht das fünfte Ausführungsbeispiel dem ersten Ausführungsbeispiel gemäß Figur 1.

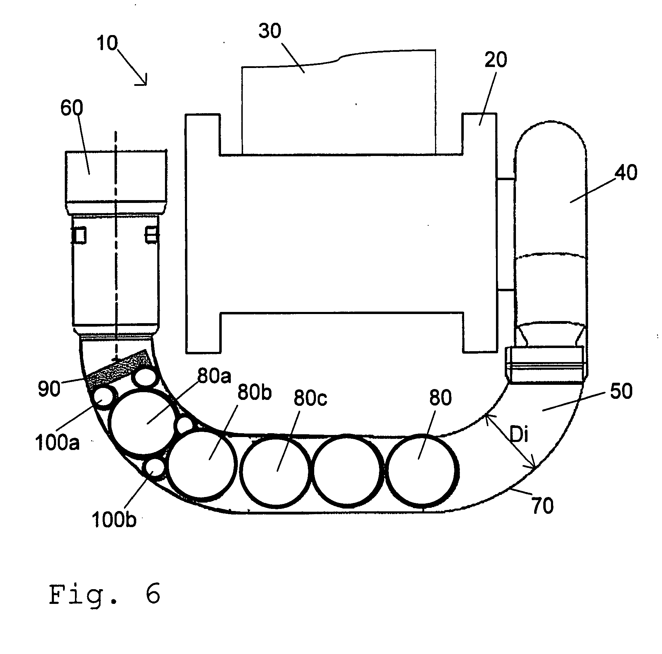

In der Figur 6 ist ein sechstes Ausführungsbeispiel für einen Gurtaufroller gezeigt. Bei diesem sechsten Ausführungsbeispiel befinden sich zwei O-Ringe 100a und 100b in dem Führungsrohr 70. Der erste O-Ring 100a befindet sich zwischen dem Antriebskolben 90 und der ersten Kugel 80a und der zweite O-Ring 100b zwischen der ersten Kugel 80a und der zweiten Kugel 80b.

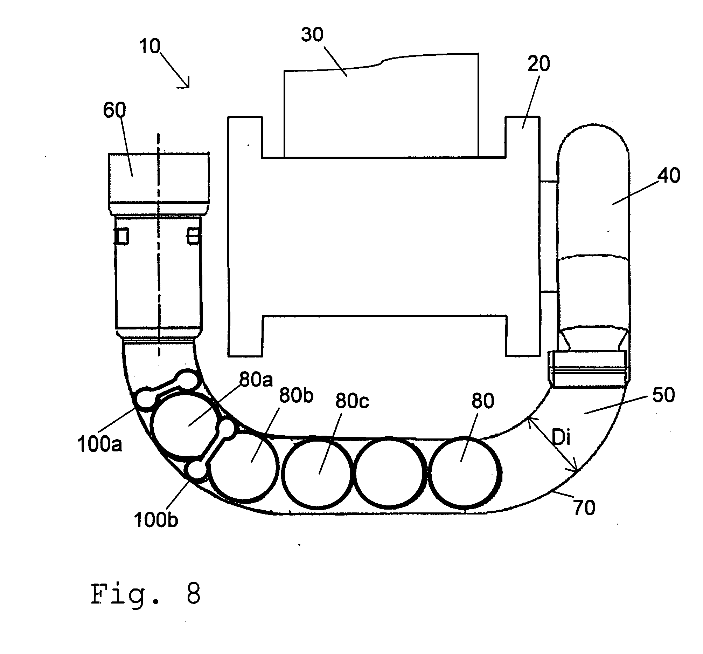

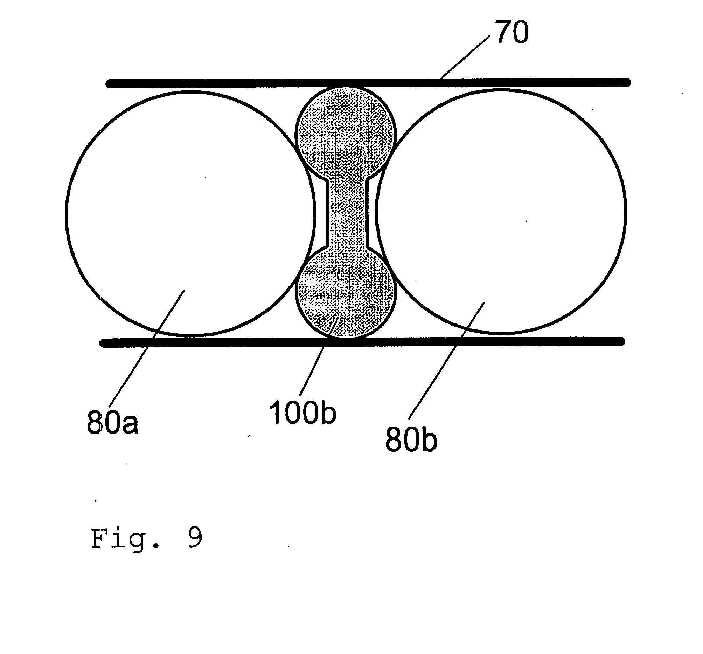

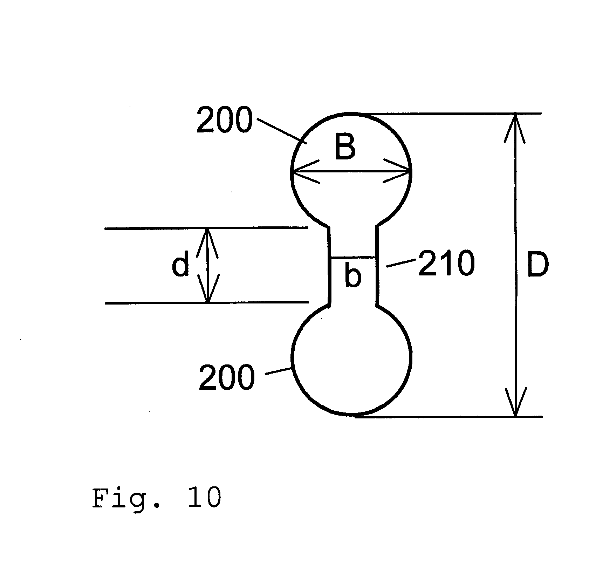

In der Figur 8 ist ein Ausführungsbeispiel mit zwei Dichtelementen 100a und 100b ohne Antriebskolben gezeigt. Das Dichtelement 100b mit den beiden Kugeln 80a und 80b zeigt die Figur 9 nochmals im Detail. In der Figur 10 ist das Dichtelement 100a bzw. 100b nochmals beispielhaft allein gezeigt.

In den Figuren 8 und 9 kann man erkennen, dass die Dichtelemente schmaler als die Kugeln sind.

In der Figur 10 ist dargestellt, dass das Dichtelement 100 einen radial äußeren Außenbereich 200 und einen radial inneren Innenbereich 210 aufweist, wobei der Innenbereich 210 schmaler als der Außenbereich 200 ist. Die Dicke im Innenbereich 210 ist mit dem Bezugszeichen b und die Dicke im Außenbereich 200 ist mit dem Bezugszeichen B gekennzeichnet. Es gilt also $b < B$.

Der Innendurchmesser d und der Außendurchmesser D können beispielsweise in folgenden Bereichen liegen:

$$3 \text{ mm} \leq d \leq 6 \text{ mm}$$

$$11 \text{ mm} \leq D \leq 11,6 \text{ mm}$$

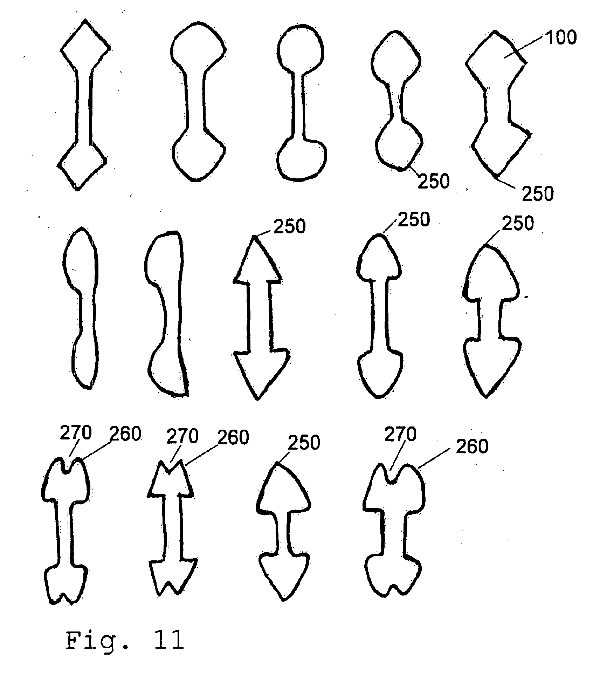

In der Figur 11 sind weitere Ausführungsbeispiele für Dichtelemente 100 gezeigt. Einige dieser Ausführungsbeispiele weisen eine Dichtlippe 250 auf, die sich radial nach außen verjüngt. Andere weisen einen Dichtlippenpaar 260 mit jeweils zwei Dichtlippen auf, die durch eine Furche 270 voneinander getrennt sind.

Bezugszeichenliste

| | |
|---|---|
| 10 | Gurtaufroller |
| 20 | Gurtspule |
| 30 | Sicherheitsgurt |
| 40 | Antriebsvorrichtung |
| 50 | Verbindungseinrichtung |
| 60 | Gasgenerator |
| 70 | Führungsrohr |
| 80 | Schubglieder |
| 80a | Kugel |
| 80a' | Seite |
| 80b | Kugel |
| 80c | Kugel |
| 90 | Antriebskolben |
| 100 | O-Ring |
| 100a | O-Ring |
| 100b | O-Ring |
| 100c | O-Ring |
| 100' | Außenringseite |
| 110 | Beschichtung |
| 200 | Außenbereich |
| 210 | Innenbereich |
| 250 | Dichtlippe |
| 260 | Dichtlippenpaar |
| 270 | Furche |
| D | Außendurchmesser |
| Di | Innendurchmesser |
| d | Innendurchmesser |
| b, B | Dicken |

**Patentansprüche**

1. Gurtaufroller (10) für einen Sicherheitsgurt (30) mit einer Gurtspule (20) zum Auf- und Abwickeln des Sicherheitsgurts und einem Strafferantrieb, der umfasst:

   - einen Gasgenerator (60),
   - eine mit der Gurtspule (20) in Verbindung stehende Antriebsvorrichtung (40) und
   - eine Verbindungseinrichtung (50), die den Gasgenerator und die Antriebsvorrichtung verbindet,
   - wobei die Verbindungseinrichtung ein Führungsrohr (70) und mehrere in dem Führungsrohr befindliche Schubglieder (80) aufweist, die nach einem Auslösen des Gasgenerators beschleunigt werden und die Antriebsvorrichtung zum Aufwickeln des Sicherheitsgurtes mittelbar oder unmittelbar antreiben,

   **dadurch gekennzeichnet, dass**
   in dem Führungsrohr (70) zwischen dem Gasgenerator (60) und der dem Gasgenerator zugewandten Seite (80a') zumindest eines der Schubkörper (80a, 80b, 80c) zumindest ein Dichtelement (100a, 100b, 100c) angeordnet ist, das innen an dem Führungsrohr anliegt.

2. Gurtaufroller nach Anspruch 1,
**dadurch gekennzeichnet, dass**
das Dichtelement schmaler als die Schubkörper ist.

3. Gurtaufroller nach einem der voranstehenden Ansprüche,
**dadurch gekennzeichnet, dass**
das Dichtelement einen radial äußeren Außenbereich (200) und einen radial inneren Innenbereich (210) aufweist, wobei der Innenbereich schmaler als der Außenbereich ist.

4. Gurtaufroller nach einem der voranstehenden Ansprüche,
**dadurch gekennzeichnet, dass**
das Dichtelement in seinem radial äußeren Außenbereich eine Dichtlippe (250) aufweist, die sich radial nach außen verjüngt.

5. Gurtaufroller nach einem der voranstehenden Ansprüche,
**dadurch gekennzeichnet, dass**
das zumindest eine Dichtelement in seinem radial äußeren Außenbereich mindestens zwei Dichtlippen aufweist, die voneinander durch eine Furche (270) getrennt sind.

6. Gurtaufroller nach einem der voranstehenden Ansprüche,
**dadurch gekennzeichnet, dass**
das zumindest eine Dichtelement durch einen Dichtring (100a, 100b, 100c) gebildet ist, dessen Außenringseite (100') innen an dem Führungsrohr anliegt.

7. Gurtaufroller nach Anspruch 6,
**dadurch gekennzeichnet, dass**
das Verhältnis zwischen dem Außendurchmesser (D) des Dichtrings und dem Innendurchmesser (d) des Dichtrings zwischen 1,5 und 3 beträgt.

8. Gurtaufroller nach einem der voranstehenden Ansprüche,
**dadurch gekennzeichnet, dass**
die Außenseite (100') des zumindest einen Dichtelements (100) eine reibungsreduzierende Beschichtung (110) aufweist.

9. Gurtaufroller nach einem der voranstehenden Ansprüche,
**dadurch gekennzeichnet, dass**
der Außendurchmesser (D) des Dichtelements zwischen dem 1,02-fachen und dem 1,06-fachen des Innendurchmessers (Di) des Führungsrohrs liegt.

10. Gurtaufroller nach einem der voranstehenden Ansprüche,
**dadurch gekennzeichnet, dass**
das Dichtelement aus einem oder mehreren der folgenden Materialien besteht oder diese aufweist: Ethylen-Propylen-Dien-Kautschuk, Ethylen-Propylen-Kautschuk, Nitrilkautschuk, hydrierten Nitrilkautschuk, Naturkautschuk.

11. Gurtaufroller nach einem der voranstehenden Ansprüche,
**dadurch gekennzeichnet, dass**
in dem Führungsrohr (70) an der dem Gasgenerator zugewandten Seite (80a') des vom Gasgenerator aus gesehen ersten Schubkörpers (80a) ein Dichtelement (100a) angeordnet ist.

12. Gurtaufroller nach einem der voranstehenden Ansprüche,
**dadurch gekennzeichnet, dass**
in dem Führungsrohr (70) zwischen dem vom Gasgenerator aus gesehen ersten und zweiten Schubkörper (80a, 80b) ein Dichtelement (100b) angeordnet ist.

13. Gurtaufroller nach einem der voranstehenden Ansprüche,
**dadurch gekennzeichnet, dass**
in dem Führungsrohr (70) zwischen dem vom Gasgenerator aus gesehen zweiten und dritten Schubkörper (80b, 80c) ein Dichtelement (100c) angeordnet ist.

14. Gurtaufroller nach einem der voranstehenden Ansprüche,
**dadurch gekennzeichnet, dass**
in dem Führungsrohr (70) zumindest zwei Dichtelemente (100b, 100c) vorhanden sind, nämlich zumindest ein Dichtelement (100b) zwischen dem vom Gasgenerator aus gesehen ersten und zweiten Schubkörper (80a, 80b) und zumindest ein Dichtelement (100c) zwischen dem vom Gasgenerator aus gesehen zweiten und dritten Schubkörper (80b, 80c).

15. Gurtaufroller nach einem der voranstehenden Ansprüche,
**dadurch gekennzeichnet, dass**
in dem Führungsrohr zumindest drei Dichtelemente (100a, 100b, 100c) vorhanden sind, nämlich zumindest ein Dichtelement (100b) zwischen dem vom Gasgenerator aus gesehen ersten und zweiten Schubkörper (80a, 80b), zumindest ein Dichtelement (100c) zwischen dem vom Gasgenerator aus gesehen zweiten und dritten Schubkörper (80b, 80c) und zumindest ein Dichtelement (100a) an der dem Gasgenerator zugewandten Seite (80a') des vom Gasgenerator aus gesehen ersten Schubkörpers (80a).

## Claims

1. Belt retractor (10) for a safety belt (30) with a belt reel (20) for winding and unwinding the safety belt and with a tightener drive, which comprises:

   - a gas generator (60),
   - a drive device (40) connected to the belt reel (20), and
   - a connecting device (50), which connects the gas generator and the drive device,
   - the connecting device having a guide tube (70) and a plurality of thrust members (80), which are situated in the guide tube, are accelerated after triggering of the gas generator and directly or indirectly drive the drive device for the purpose of winding the safety belt,

   **characterized in that**
   at least one sealing element (100a, 100b, 100c) is arranged in the guide tube (70) between the gas generator (60) and that side (80a') of at least one of the thrust bodies (80a, 80b, 80c) which faces the gas generator, which sealing element rests against the inside of the guide tube.

2. Belt retractor according to Claim 1,
   **characterized in that**
   the sealing element is narrower than the thrust bodies.

3. Belt retractor according to one of the preceding claims,
   **characterized in that**
   the sealing element has a radially outer outward region (200) and a radially inner inward region (210), the inward region being narrower than the outward region.

4. Belt retractor according to one of the preceding claims,
   **characterized in that**
   the sealing element has in its radially outer outward region a sealing lip (250) which tapers radially toward the outside.

5. Belt retractor according to one of the preceding claims,
   **characterized in that**
   the at least one sealing element has in its radially outer outward region at least two sealing lips, which are separated from one another by a groove (270).

6. Belt retractor according to one of the preceding claims,

   **characterized in that**
   the at least one sealing element is formed by a sealing ring (100a, 100b, 100c), the outer ring side (100') of which rests against the inside of the guide tube.

7. Belt retractor according to Claim 6,
   **characterized in that**
   the ratio between the outside diameter (D) of the sealing ring and the inside diameter (d) of the sealing ring is between 1.5 and 3.

8. Belt retractor according to one of the preceding claims,
   **characterized in that**
   the outer side (100') of the at least one sealing element (100) has a friction-reducing coating (110).

9. Belt retractor according to one of the preceding claims,
   **characterized in that**
   the outside diameter (D) of the sealing element is between 1.02 and 1.06 times the inside diameter (Di) of the guide tube.

10. Belt retractor according to one of the preceding claims,
    **characterized in that**
    the sealing element is composed of one or more of the following materials or contains it/them: ethylene propylene diene rubber, ethylene propylene rubber, nitrile rubber, hydrogenated nitrile rubber, natural rubber.

11. Belt retractor according to one of the preceding claims,
    **characterized in that**
    a sealing element (100a) is arranged in the guide tube (70) on that side (80a') of the first thrust body (80a) from the gas generator which faces the gas generator.

12. Belt retractor according to one of the preceding claims,
    **characterized in that**
    a sealing element (100b) is arranged in the guide tube (70) between the first and the second thrust body (80a, 80b) from the gas generator.

13. Belt retractor according to one of the preceding claims,
    **characterized in that**
    a sealing element (100c) is arranged in the guide tube (70) between the second and the third thrust body (80b, 80c) from the gas generator.

14. Belt retractor according to one of the preceding claims,
    **characterized in that**

there are at least two sealing elements (100b, 100c) in the guide tube (70), namely at least one sealing element (100b) between the first and the second thrust body (80a, 80b) from the gas generator and at least one sealing element (100c) between the second and the third thrust body (80b, 80c) from the gas generator.

15. Belt retractor according to one of the preceding claims,
**characterized in that**
there are at least three sealing elements (100a, 100b, 100c) in the guide tube, namely at least one sealing element (100b) between the first and the second thrust body (80a, 80b) from the gas generator, at least one sealing element (100c) between the second and the third thrust body (80b, 80c) from the gas generator, and at least one sealing element (100a) on that side (80a') of the first thrust body (80a) from the gas generator which faces the gas generator.

**Revendications**

1. Enrouleur de ceinture (10) pour une ceinture de sécurité (30) équipé d'une bobine de ceinture (20) pour enrouler et dérouler la ceinture de sécurité et d'un entraînement par rétracteur, qui comprend :

   - un générateur de gaz (60) ;
   - un dispositif d'entraînement (40) en liaison avec la bobine de ceinture (20) ;
   - un dispositif de jonction (50) reliant le générateur de gaz et le dispositif d'entraînement ;
   - le dispositif de jonction comportant un tube de guidage (70) et plusieurs éléments de poussée (80) situés dans le tube de guidage et accélérés après un déclenchement du générateur de gaz et le dispositif d'entraînement entraînant directement ou indirectement l'enroulement de la ceinture de sécurité ;

   **caractérisé en ce que** :

   au moins un élément d'étanchéité (100a, 100b, 100c) est disposé dans le tube de guidage (70), entre le générateur de gaz (60) et le côté (80a') orienté vers le générateur de gaz d'au moins un des corps de poussée (80a, 80b, 80c), ledit élément d'étanchéité reposant à l'intérieur contre le tube de guidage.

2. Enrouleur de ceinture selon la revendication 1, **caractérisé en ce que** l'élément d'étanchéité est plus étroit que les corps de poussée.

3. Enrouleur de ceinture selon l'une quelconque des revendications précédentes, **caractérisé en ce que** l'élément d'étanchéité comporte une zone extérieure (200) orientée radialement vers l'extérieur et une zone intérieure (210) orientée radialement vers l'intérieur, la zone intérieure étant plus étroite que la zone extérieure.

4. Enrouleur de ceinture selon l'une quelconque des revendications précédentes, **caractérisé en ce que** l'élément d'étanchéité comporte dans sa zone extérieure orientée radialement vers l'extérieur une lèvre d'étanchéité (250) se rétrécissant radialement vers l'extérieur.

5. Enrouleur de ceinture selon l'une quelconque des revendications précédentes, **caractérisé en ce que** l'au moins un élément d'étanchéité comporte dans sa zone extérieure orientée radialement vers l'extérieur au moins deux lèvres d'étanchéité séparées l'une de l'autre par un sillon (270).

6. Enrouleur de ceinture selon l'une quelconque des revendications précédentes, **caractérisé en ce que** l'au moins un élément d'étanchéité est constitué par une bague d'étanchéité (100a, 100b, 100c) dont le côté de bague extérieure (100') repose à l'intérieur contre le tube de guidage.

7. Enrouleur de ceinture selon la revendication 6, **caractérisé en ce que** le rapport entre le diamètre extérieur (D) de la bague d'étanchéité et le diamètre intérieur (d) de la bague d'étanchéité se situe entre 1,5 et 3.

8. Enrouleur de ceinture selon l'une quelconque des revendications précédentes, **caractérisé en ce que** le côté extérieur (100') de l'au moins un élément d'étanchéité (100) comporte un revêtement (110) permettant de réduire les frottements.

9. Enrouleur de ceinture selon l'une quelconque des revendications précédentes, **caractérisé en ce que** le diamètre extérieur (D) de l'élément d'étanchéité se situe entre 1,02 fois et 1,06 fois le diamètre intérieur (Di) du tube de guidage.

10. Enrouleur de ceinture selon l'une quelconque des revendications précédentes, **caractérisé en ce que** l'élément d'étanchéité se compose d'un des matériaux suivants ou de plusieurs d'entre eux ou comporte un ou plusieurs de ceux-ci : du caoutchouc éthylène-propylène-diène, du caoutchouc éthylène-propylène, du caoutchouc nitrile, du caoutchouc nitrile hydraté, du caoutchouc naturel.

11. Enrouleur de ceinture selon l'une quelconque des revendications précédentes, **caractérisé en ce qu'**un élément d'étanchéité (100a) est disposé dans le tube de guidage (70) au niveau du côté (80a') orienté vers le générateur de gaz du premier corps de poussée (80a) vu depuis le générateur de gaz.

**12.** Enrouleur de ceinture selon l'une quelconque des revendications précédentes, **caractérisé en ce qu'**un élément d'étanchéité (100b) est disposé dans le tube de guidage (70), entre les premier et deuxième corps de poussée (80a, 80b) vus depuis le générateur de gaz.

**13.** Enrouleur de ceinture selon l'une quelconque des revendications précédentes, **caractérisé en ce qu'**un élément d'étanchéité (100c) est disposé dans le tube de guidage (70), entre les deuxième et troisième corps de poussée (80b, 80c) vus depuis le générateur de gaz.

**14.** Enrouleur de ceinture selon l'une quelconque des revendications précédentes, **caractérisé en ce qu'**au moins deux éléments d'étanchéité (100b, 100c) sont présents dans le tube de guidage (70), notamment au moins un élément d'étanchéité (100b) placé entre les premier et deuxième corps de poussée (80a, 80b) vus depuis le générateur de gaz et au moins un élément d'étanchéité (100c) placé entre les deuxième et troisième corps de poussée (80b, 80c) vus depuis le générateur de gaz.

**15.** Enrouleur de ceinture selon l'une quelconque des revendications précédentes, **caractérisé en ce qu'**au moins trois éléments d'étanchéité (100a, 100b, 100c) sont présents dans le tube de guidage, notamment au moins un éléments d'étanchéité (100b) placé entre les premier et deuxième corps de poussée (80a, 80b) vus depuis le générateur de gaz, au moins un élément d'étanchéité (100c) placé entre les deuxième et troisième corps de poussée (80b, 80c) vus depuis le générateur de gaz et au moins un élément d'étanchéité (100a) positionné au niveau du côté (80a') orienté vers le générateur de gaz du premier corps de poussée (80a) vu depuis le générateur de gaz.

Fig. 1

Fig. 2

Fig. 3

Fig. 4

Fig. 5

EP 2 222 518 B1

Fig. 6

EP 2 222 518 B1

Fig. 7

Fig. 8

Fig. 9

Fig. 10

EP 2 222 518 B1

Fig. 11

**IN DER BESCHREIBUNG AUFGEFÜHRTE DOKUMENTE**

**In der Beschreibung aufgeführte Patentdokumente**

- EP 1283137 A

- EP 1283137 A2